# EUROPEAN PATENT SPECIFICATION

(11) **EP 2 377 437 B1**
(45) Date of publication and mention of the grant of the patent: **31.10.2012**
(21) Application number: 10425124.4
(22) Date of filing: 19.04.2010
(51) Int. Cl.: A47J 31/46, A47J 43/046

(54) **Machine for making and dispensing a drink**
Maschine zur Herstellung und Ausgabe eines Getränks
Machine pour la fabrication et la distribution d'une boisson

(43) Date of publication of application: 19.10.2011
(73) Proprietor: Capitani S.r.l., 22070 Solbiate (CO) (IT)
(72) Inventor: Capitani, Gionata, 22070 Albiolo Como (IT)
(74) Representative: Chimini, Francesco

(56) References cited:
- WO-A1-2010/023312
- WO-A2-2009/130661
- US-A- 4 757 754

## Description

The present invention relates to a machine for making and dispensing a drink. In particular, the invention relates to a machine able to make an infused drink by mixing pressurised hot water with an aromatic substance, and to heat and/or froth and/or cream a drink made from a liquid or soluble product.

Machines for producing an infused drink fitted with a tube dispensing hot water and steam are known of. Such machines make it possible to heat and/or froth a previously prepared drink and contained in a cup or glass which the user places under said tube, so that the latter remains immersed in the drink. The froth is produced by agitating the cup or glass in relation to the steam dispenser tube.

It is clear, that in a machine of this kind, the quantity and quality of the froth depend on the skill of the user. In any case, this operation is not particularly easy and the final result is not always repeatable in terms of method or quality. Moreover, the immersion of the steam dispenser tube in the drink being frothed creates cleaning problems and therefore affects the hygiene of the machine.

On the other hand, specific appliances for producing froth from a liquid beverage, such as milk, are known of. These appliances comprise a recipient for the liquid and a rotating mixer organ positioned in said recipient so as to produce the froth. Said mixer organ is commanded to rotate at high speed by an electric motor housed in a body under the recipient. In addition, the appliance comprises its own heating devices, such as an electric resistor, to heat the liquid to be frothed.

One example of such appliance is described in W02006/050900.

Clearly, such appliances can in no way replace a machine for the production of an infused drink, but constitute an additional electrical appliance. Moreover, they are not suitable for frothing or creaming a substance which is not in a liquid state, such as a fine powder.

Document WO-A-2009/130661 discloses a machine for making and dispensing an infused drink, comprising infusion means for making an infused drink by mixing pressurised hot water with an aromatic substance; a water tank; a first electric pump able to pump a preset quantity of water from said tank; first heating devices able to heat said quantity of water pumped from the tank, where said infusion means are supplied with the water heated by said heating devices. A recipient for a liquid or soluble drink is also provided, said recipient being supplied with a preset quantity of water pumped from the tank by a second electric pump and heated by second heating devices.

The purpose of the present invention is to propose a machine for the production of an infused drink which is able to heat and/or froth and/or cream a drink, at the same time obviating the drawbacks complained of above in relation to the machine according to the state of the art.

Such purpose is achieved by a machine according to claim 1. The dependent claims describe preferred or advantageous embodiments of the machine for the production of an infused drink.

The characteristics and advantages of the machine according to the invention will in any case be evident from the description given of its preferred embodiments made by way of a non-limiting example with reference to the attached drawings, wherein:

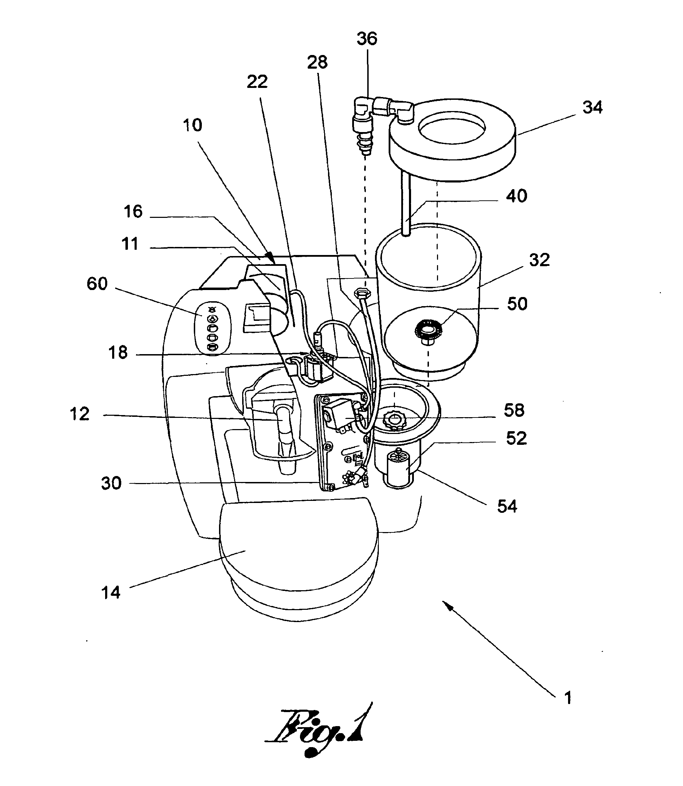

- Figure 1 is a frontal, schematic, exploded view of the machine for the production of an infused drink according to the invention; and

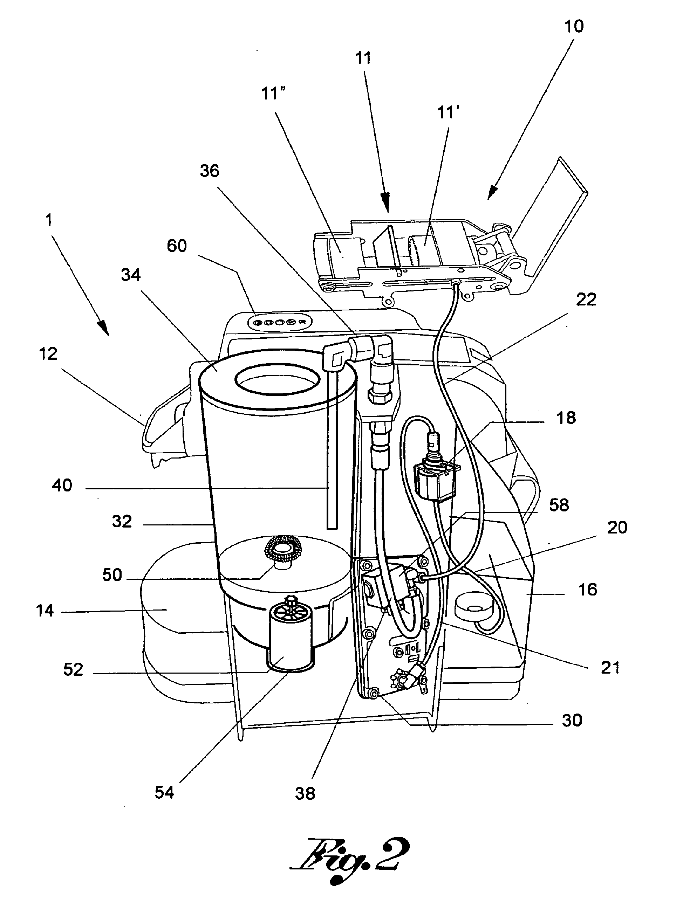

- Figure 2 is a schematic side view of the machine, partially assembled.

In said drawings, reference numeral 1 globally denotes a machine for making an infused drink according to the invention, in its entirety.

In one general embodiment, the machine 1 comprises infusion means 10 for making an infused drink by mixing pressurised hot water with an aromatic substance. In the example illustrated in the drawings, the infusion means comprise an infusion group 11 incorporated in the machine and suitable for holding a pod or capsule in which the aromatic substance is contained. Such infusion group 11 comprises for example a moving part 11' and a fixed part 11" which jointly delimit an infusion chamber. The moving part 11', when is separated from the fixed part, consents loading of a pod or capsule in the infusion group; subsequently, the moving part pushes said pod or capsule into the infusion chamber. The infusion group 11 comprises perforating means of the pod or capsule so that the hot water, supplied for example to the moving part of the infusion group, traverses the pod or capsule forming the drink in the infusion chamber. From the latter dispensing means 12 of the infused drink extend, for example directed onto the support plane 14 of a cup, mug or glass.

The machine according to the invention may in any case also be of the type functioning with an external or filter-holder infusion chamber, associable with the machine, in which a portion of an aromatic substance, for example in powder and/or in a pod, is placed

The water which supplies the infusion means 10 is contained in a water tank 16.

The water contained in the tank 16 is pumped towards the infusion means 10, in a preset quantity, by one electric pump 18. The electric pump 18 is in fluidic communication with the tank 16 through a first section 20 of a water supply pipe.

The water taken from the tank 16 is heated by heating devices 30, positioned downstream of the electric pump 18 and connected to it by a second section 21 of the water supply pipe. In one embodiment, said heating devices 30 comprises a heat exchanger.

The heated water is supplied to the infusion means 10 by a third section 22 of the water supply pipe, which connects the heat exchanger 30 with the infusion means 10.

The machine 1 comprises in addition at least one recipient 32, for example in the shape of a glass, for a liquid or soluble drink, for example milk or chocolate in a liquid or powder state. Such recipient 32 is supplied with a preset quantity of water pumped from the tank 16 by the electric pump 18 and heated by the heating devices 30 serving the infusion group 11.

Advantageously, the recipient is closed, at least partially, by a lid 34.

Said lid 34 bears connection means 36 between an entry duct of hot water or steam 38 coming from the heating devices 30 and an exit pipe 40 of hot water or steam inside the recipient itself. In other words, two hot water supply ducts extend from the heating devices 30: a first duct 22 directed towards the infusion means 10 and a second duct 38 directed towards the recipient 32.

According to a particularly advantageous embodiment, a rotating mixer organ 50 able to froth or cream the liquid beverage contained in the recipient 32 is inserted in said recipient. Said mixer organ 50 is commanded in rotation by an electric motor 52 housed in a motor compartment 54 made in the machine frame. Advantageously, said motor compartment 54 is made under the recipient 32.

In one embodiment, the recipient 32 has a perforated bottom for the passage of the motor shaft and the mixer organ 50 is mechanically coupled to such shaft.

In one particularly advantageous embodiment variation, the mixer organ 50 is magnetically coupled to the shaft of the electric motor, in other words without contact. This way, the bottom of the recipient need not be perforated and it is therefore unnecessary to provide special sealing means between the recipient and the engine shaft. For example, the bottom of the recipient may have a boss, for example of a cylindrical form, around which the mixer organ is fitted with the possibility of low friction rotation.

In one embodiment, the mixer organ 50 has annular or toroidal shape. For example, the mixer organ is a toroidal spring. In one embodiment, said toroidal mixer organ 50 comprises at least one magnetic or ferromagnetic element.

Advantageously, the boss on the bottom of the recipient forms, seen from the engine compartment side, a recess suitable to hold at least one magnetic or ferromagnetic command element directly connected to the motor shaft of the electric motor. Consequently, the rotation of the motor shaft causes a rotation of the magnetic or ferromagnetic command element which in turn drags in rotation the magnetic or ferromagnetic element of the mixer organ.

According to one embodiment, the recipient 32 is extractable from its seat above the motor compartment. The recipient is thus separable from the machine. Advantageously, also the lid 34 is removable from the machine together with the recipient. To such purpose, the connection 36 to the water supply is of the quick fitting type, so as to be easily connected/disconnected from said pipe.

In order to selectively direct a quantity of water aspirated by the electric pump and heated by the heating devices towards the infusion group or towards the recipient, the machine comprises deviator means 58 that can be operated by a user, for example by means of a switch 60. Said deviator means comprise a solenoid valve deviating the flow positioned downstream of the heating devices 30.

In one embodiment, the water tank is positioned at the rear of the machine, while the recipient and motor compartment are positioned on the side of the machine.

The machine described is therefore a machine for making an infused drink, for example a coffee machine, incorporating heating devices to heat using hot water or steam and/or to cream and/or to froth a liquid or soluble product, such as chocolate, cappuccino, tea, milk, inserted in a recipient which is part of the said machine.

The water taken from the tank by the pump passes through the exchanger to be heated or turned into steam as required; then the water or steam passes through the lid of the recipient and the exit pipe into the recipient.

By putting the soluble products or milk into the extractable recipient, thanks to the hot water or steam coming out of the tube, said soluble products or milk are dissolved or heated, in part thanks to the action of the mixer organ. Said mixer organ also has the function of creaming or frothing the drinks.

Lastly, the recipient with the ready drink is extracted and poured into the cup.

Thanks to the fact that the recipient is supplied with water from the water tank, soluble products can also be used.

Thanks to the presence of the rotating mixer organ the creaming or frothing of the drink achieved is of a constant and desired quality. The steam emitted into the recipient is no longer used to froth the drink but solely to heat it.

The machine according to the invention is also advantageous from a cost point of view in that it uses the pump and heat exchanger provided to power the infusion group. In addition, by being only slightly larger than a normal domestic coffee machine, it occupies less space than the total space occupied by two separate kitchen appliances such as a traditional coffee machine and a frothing machine.

A person skilled in the art may make modifications, adaptations and replacements of elements with others functionally equivalent to the embodiments of the machine according to the invention so as to satisfy contingent requirements while remaining within the scope of protection of the following claims.

## Claims

1. Machine for making and dispensing an infused drink, comprising:
- infusion means (10) for making an infused drink by mixing pressurised hot water with an aromatic substance;
- a water tank (16);
- one electric pump (18) able to pump a preset quantity of water from said tank;
- heating devices (30) able to heat said quantity of water pumped from the tank, where said infusion means are supplied with the water heated by said heating devices;
- a recipient (32) for a liquid or soluble drink, said recipient being supplied with a preset quantity of water pumped from the tank (16) by said electric pump (18) and heated by said heating devices (30) ; and
- deviator means (58) which can be activated by the user to direct a quantity of water pumped from the tank alternatively towards the infusion means (10) or towards the recipient (32), wherein said deviator means (58) comprise a solenoid valve placed downstream of the heating devices.

2. Machine according to claim 1, wherein said recipient (32) is closed at least partially by a lid (34).

3. Machine according to claim 2, wherein said lid (34) bears connection means (36) between an entry duct (38) of hot water or steam coming from the heating devices (30) and an exit pipe of hot water or steam (40) inside the recipient.

4. Machine according to any of the previous claims wherein a mixer organ (50) is inserted in said recipient, commanded in rotation by an electric motor (52) housed in a motor compartment (54) made in the machine frame.

5. Machine according to claim 4, wherein said mixer organ (50) is mechanically coupled to the shaft of the electric motor.

6. Machine according to claim 4, wherein said mixer organ (50) is magnetically coupled to the shaft of the electric motor.

7. Machine according to any of the previous claims wherein the recipient can be extracted from its seat.

8. Machine according to any of the previous claims wherein said heating devices comprise at least one heat exchanger.

9. Machine according to any of the previous claims wherein the infusion means (10) comprise an infusion group (11) incorporated into the machine and able to receive a pod or capsule containing the aromatic substance.

10. Machine according to claim 9, wherein said infusion group (11) comprises for example a moving part (11') and a fixed part (11") which jointly delimit an infusion chamber, said moving part (11') being able to push said pod or capsule into the infusion chamber.

11. Machine according to claim 9 or 10, wherein dispensing means (12) of the infused drink extend from the moving part (11").

## Patentansprüche

1. Maschine zur Herstellung und Ausgabe eines Aufbrühgetränks, umfassend:
- Aufbrühmittel (10) zur Herstellung eines Aufbrühgetränks durch Mischen von heißem Druckwasser mit einer aromatischen Substanz;
- einen Wassertank (16);
- eine Elektropumpe (18), die eine voreingestellte Wassermenge aus dem Tank pumpen kann;
- Heizvorrichtungen (30), die die aus dem Tank gepumpte Wassermenge erhitzen können, wobei die Aufbrühmittel mit dem durch die Heizmittel erhitzten Wasser versorgt werden;
- einen Behälter (32) für ein flüssiges oder lösliches Getränk, wobei der Behälter mit einer mittels der Elektropumpe (18) aus dem Tank gepumpten und mittels der Heizvorrichtungen (30) erhitzten, voreingestellten Wassermenge versorgt wird; und
- Deflektormittel (58), welche vom Nutzer akitiviert werden können, um eine aus dem Tank gepumpte Wassermenge alternativ zum Aufbrühmittel (10) oder zum Behälter (32) zu lenken, wobei die Deflektormittel (58) ein unterhalb der Heizvorrichtungen platziertes Magnetventil umfassen.

2. Maschine nach Anspruch 1, wobei der Behälter (32) wenigstens teilweise durch eine Abdeckung (34) geschlossen ist.

3. Maschine nach Anspruch 2, wobei die Abdeckung (34) Verbindungsmittel (36) zwischen einer Eingangsleitung (38) für heißes Wasser oder Dampf aus den Heizvorrichtungen (30) und eine Ausgangsleitung für heißes Wasser oder Dampf (40) in dem Behälter trägt.

4. Maschine nach einem der vorangehenden Ansprüche, wobei ein Mischerelement (50) in den Behälter eingeführt ist, das durch einen Elektromotor (52) in Drehung gesteuert wird, der in einem in dem Maschinengestellt gebildeten Motorraum (54) aufgenommen ist.

5. Maschine nach Anspruch 4, wobei das Mischerelement (50) mechanisch an die Welle des Elektromotors gekoppelt ist.

6. Maschine nach Anspruch 4, wobei das Mischerelement (50) magnetisch an die Welle des Elektromotors gekoppelt ist.

7. Maschine nach einem der vorangehenden Ansprüche, wobei der Behälter aus seinem Sitz herausgenommen werden kann.

8. Maschine nach einem der vorangehenden Ansprüche, wobei die Heizvorrichtungen wenigstens einen Wärmetauscher umfassen.

9. Maschine nach einem der vorangehenden Ansprüche, wobei die Aufbrühmittel (10) eine in die Maschine integrierte Aufbrühbaugruppe (11) umfassen, die ein Pad oder eine Kapsel mit der aromatischen Substanz aufnehmen kann.

10. Maschine nach Anspruch 9, wobei die Aufbrühbaugruppe (11) beispielsweise einen sich bewegenden Abschnitt (11') und einen festen Abschnitt (11") umfasst, die gemeinsam eine Aufbrühkammer begrenzen, wobei der sich bewegende Abschnitt (11') das Pad oder die Kapsel in die Aufbrühkammer drücken kann.

11. Maschine nach Anspruch 9 oder 10, wobei sich Ausgabemittel (12) für das Aufbrühgetränk von dem sich bewegenden Abschnitt (11") erstrecken.

## Revendications

1. Machine pour la fabrication et la distribution d'une boisson infusée, comprenant :
- des moyens d'infusion (10) pour fabriquer une boisson infusée en mélangeant de l'eau chaude sous pression avec une substance aromatique ;
- un réservoir d'eau (16) ;
- une pompe électrique (18) capable de pomper une quantité prédéterminée d'eau dudit réservoir ;
- des dispositifs de chauffage (30) capables de chauffer ladite quantité d'eau pompée du réservoir, où lesdits moyens d'infusion sont alimentés avec l'eau chauffée par lesdits dispositifs de chauffage ;
- un récipient (32) pour une boisson liquide ou soluble, ledit récipient étant alimenté avec une quantité prédéterminée d'eau pompée dans le réservoir (16) par ladite pompe électrique (18) et chauffée par lesdits dispositifs de chauffage (30) ; et
- des moyens de déviation (58) qui peuvent être activés par l'utilisateur pour diriger une quantité d'eau pompée dans le réservoir en variante vers les moyens d'infusion (10) ou vers le récipient (32), dans laquelle lesdits moyens de déviation (58) comprennent une électrovanne placée en aval des dispositifs de chauffage.

2. Machine selon la revendication 1, dans laquelle ledit récipient (32) est fermé au moins partiellement par un couvercle (34).

3. Machine selon la revendication 2, dans laquelle ledit couvercle (34) supporte des moyens de raccordement (36) entre un conduit d'entrée (38) d'eau chaude ou de vapeur provenant des dispositifs de chauffage (30) et un tuyau de sortie d'eau chaude ou de vapeur (40) à l'intérieur du récipient.

4. Machine selon l'une quelconque des revendications précédentes, dans laquelle un organe mélangeur (50) est inséré dans ledit récipient, commandé en rotation par un moteur électrique (52) logé dans un compartiment de moteur (54) réalisé dans le châssis de la machine.

5. Machine selon la revendication 4, dans laquelle ledit organe mélangeur (50) est mécaniquement couplé à l'arbre du moteur électrique.

6. Machine selon la revendication 4, dans laquelle ledit organe mélangeur (50) est magnétiquement couplé à l'arbre du moteur électrique.

7. Machine selon l'une quelconque des revendications précédentes, dans laquelle le récipient peut être extrait de son siège.

8. Machine selon l'une quelconque des revendications précédentes, dans laquelle lesdits moyens de chauffage comprennent au moins un échangeur de chaleur.

9. Machine selon l'une quelconque des revendications précédentes, dans laquelle les moyens d'infusion (10) comprennent un groupe d'infusion (11) incorporé dans la machine et pouvant recevoir une dosette ou capsule contenant la substance aromatique.

10. Machine selon la revendication 9, dans laquelle ledit groupe d'infusion (11) comprend par exemple une partie mobile (11') et une partie fixe (11") qui délimitent conjointement une chambre d'infusion, ladite partie mobile (11') pouvant pousser ladite dosette ou capsule dans la chambre d'infusion.

11. Machine selon la revendication 9 ou 10, dans laquelle des moyens de distribution (12) de la boisson infusée s'étendent à partir de la partie mobile (11").
